# EUROPEAN PATENT APPLICATION

(11) **EP 2 407 055 A1**
(43) Date of publication of application: **18.01.2012**
(21) Application number: 11173534.6
(22) Date of filing: 12.07.2011
(51) Int. Cl.: A47B 53/02

(54) **Control and driving system for movable shelves**

(30) Priority: 14.07.2010 ES 201031067
(71) Applicant: Fontanals Bonet, Enrique, 28023 Madrid (ES)
(72) Inventor: Fontanals Bonet, Enrique, 28023 Madrid (ES)
(74) Representative: Ponti Sales, Adelaida

(57) **Abstract**

The Driving control and feeding system for movable shelves comprises a plurality of movable shelves (1) that can be moved along guides (8), each movable shelf (1) comprising one or more motors for driving the movement of each shelf (1) and a driving electronic control and feeding box (2) to manage and feeding the motor, and it is characterised in that each control and feeding box (2) comprises contact terminals for recharging it, the terminals of the control and feeding box (2) of one shelf (1) being in contact with the terminals of the control and feeding box (2) of the adjacent shelf (1) only when the shelves (1) are substantially in contact to each other, in any of the two directions.
It has the main advantage that it can be installed in a quick and cheap way.

## Description

The present invention refers to a driving control and feeding system for movable shelves, for compact archives models and custom shelves and high load pallets, whose movement of the shelves is driven by a motor and whose installation is completely wireless.

### BACKGROUND OF THE INVENTION

During lots of years, one solution that has been applied to great archives and warehouses is the use of compact wardrobes and movable shelves, that slide along rails. Therefore, differently from fixed shelves, the surface of the corridors is recovered, increasing the storage capacity (almost the double) of a room. This system is used in any kind of archives such as public administration, companies, insurers, etc., and also for storing clinic histories, libraries, etc. and also pallet warehouses.

In almost all these storage systems, the movement is done rotating a frontal flywheel or crank, that by a reduction transmission, drives an axis integral with the wheels, moving the body in any direction to close a corridor and permitting the opening of the desired corridor. Therefore, the interposing bodies are successively moved, so that the user must rotate the flywheels a lot of times every day, which is a tiring and time-consuming task.

In a very few installations there has been devised and installed an electric driving, which by a push-button in the corridor to be acceded, moves the bodies and permits the access to the desired corridor. In this installations each manufactured has proved very different solutions, all having a high cost and a complex application. The most expensive use computers, others PLCs and frequency variators, others electrotechnical solutions with relays, but they all have a common drawback: they have expensive and complex cabling systems for interconnecting each of the bodies, using conductor hoses for transmitting electric energy and signal cables for controlling the movements.

These interconnecting systems are held by flexible tubes, cable chains, metallic compasses, or other complex, expensive and problematic systems. Their installation needs specialized manpower. All these drawbacks are the main reason for the limited use of the automation in this application.

### DESCRIPTION OF THE INVENTION

With the driving control and feeding system of the invention said drawbacks can be solved, presenting other advantages that will be described.

The driving control y feeding system for movable shelves of the present invention comprises a plurality of movable shelves that can be moved along guides, each movable shelf comprising one or more motors for driving the movement of each shelf and a electronic control and driving feed box for managing and feeding the motor, characterised in that each control and feeding box comprises contact terminals for its recharging, the terminals of the control and feeding box of a shelf being in contact with the terminals of the control and feeding box of the adjacent shelf only when the shelves are substantially in contact to each other, in any of both directions.

According to a preferred embodiment, said contact terminals are telescopic terminals with a spring. When the terminals are accessible in a corridor, they do not have any voltage. For an increased security, all the voltage in the installation is very low, normally 24 V.

Preferably, the control and feeding box of each movable shelf is wireless communicated with the control and feeding box of the other movable shelves.

According to a preferred embodiment, said wireless communication between the control means of the movable shelves is done by infrared beams and/or by radiofrequency.

Advantageously, each movable shelf comprises a command panel suitable with the aesthetic of each manufacturer, to drive the movement of the shelves, for rearming the system, for an emergency stop of the movement of the shelves and for repositioning the shelves.

Furthermore, each movable shelf can advantageously comprise a light indicator with the following stated: system ready, system activated for rearming, system stopped and deactivated, and shelf not properly placed.

Each movable shelf also advantageously comprises a detector that detects the stroke end of each shelf.

The system of the present invention advantageously comprises a security photoelectric barrier for protecting the access to an open corridor between two shelves.

The driving control and feeding system for shelves of the present invention has the main advantage that it is quick and cheap to be installed, in comparison with the prior art systems. This simplification of the installation is mainly because no cabling is installed, because each shelf is linked with the other shelves in a wireless way.

It must be pointed out that thanks to its assembly simplicity and economy, it is also devised the driving control and feeding system of the present invention to be installed in already existing shelves that are manually driven.

Another advantage of the system of the present invention is that thanks to its long battery life, it permits to be operated with no electric energy, being possible to close the archive system. Furthermore, it is possible to use a coded lock for security reasons, to limit its use only to authorized people.

### BRIEF DESCRIPTION OF THE DRAWINGS

For a better understanding of what has been described some drawings are attached in which, diagrammatically and only as a non-limitative example, a practical embodiment is shown.
Fig. 1 is a diagrammatical perspective view of the driving control and feeding system of the present invention; and
Fig. 2 is a diagrammatical perspective view of the components of the driving control and feeding system of the present invention for moving movable shelves.

### DESCRIPTION OF A PREFERRED EMBODIMENT

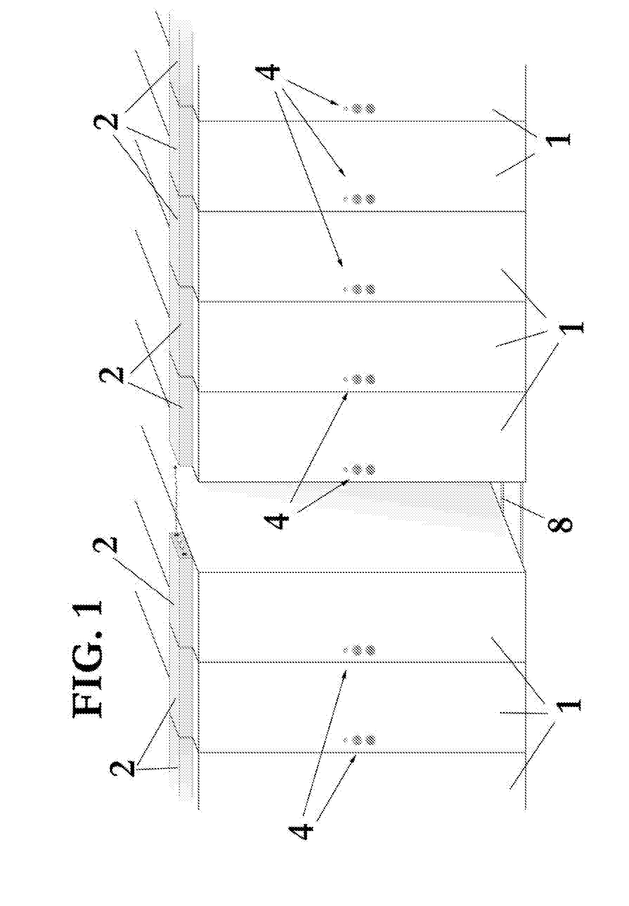

As shown in Fig. 1, the driving control and feeding system of the present invention comprises a plurality of movable shelves 1 that can slide along guides 8. The movable shelves 1 slide to permit the access to them, occupying the assembly of the shelves a reduced space.

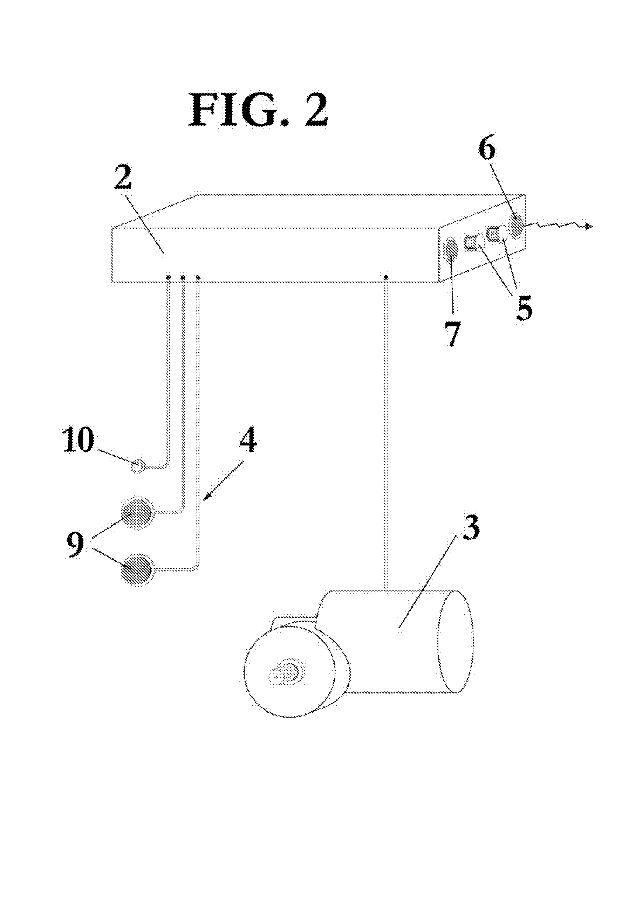

According to the invention, each movable shelf 1 comprises the elements shown in Fig. 2.

In particular, each movable shelf 1 comprises a box containing electronic control and feeding means 2 connected to a motor 3. The control means are preferably a microcontroller provided with its own software, that executes the control functions of the functional and security logic. The feeding means are preferably one or more batteries.

The motor 3 drives the movement of said shelves 1 when the user of the archive system wants, as will be described hereinafter.

On the other hand, the battery placed in the control and feeding box 2 feeds the motor 3, providing the power to permit the movement of the shelf 1.

When a shelf 1 is substantially in contact with an adjacent shelf 1, the battery is recharged, so that in the battery there is always enough charge to permit the movement of the shelf 1.

For its charging, the battery or batteries of each control and feeding box 2 comprise contact terminals 5. In a preferred embodiment, said contact terminals 5 are telescopic terminals provided with a spring, so that when they are in contact with the terminals 5 of the battery of the adjacent shelf 1, the battery is charged.

When a shelf 1 is moved apart from its adjacent shelf 1 when it is moving, i.e. when a corridor is opened, its battery is not charged. However, this is not a drawback, because the battery life of this battery is always guaranteed, because it has a duration of hours, and the movement of a shelf 1 only lasts between 8 and 20 seconds. When the movement has ended, it is fed to keep the charge on the other side, remaining disconnected only during the movement. During this time it is automatically disconnected the very low voltage of the terminals. The whole installation is galvanically disconnected from the mains.

Each shelf 1 also comprises a link element 6 for communication with the other shelves 1. This link element 6 permits to communicate with the other shelves by infrared and/or radiofrequency, or by any other wireless system.

Furthermore, each shelf 1 also comprises a stroke end detector 7, e.g. a photoelectric cell, which detects that the shelf 1 has been reached the desired position.

To permit the user to handle the system of the present invention, each shelf 1 comprises a control panel 4 formed e.g. by push-buttons 9 and a light indicator 10, whose operation will be explained hereinafter. Any kind of components can be connected, electromechanical, tactile, optical or even distance components placed in electric wheelbarrows.

The control panel 4 permits to carry out the following functions through the push-buttons:
- Opening: It operates the system for moving the shelves 1 to open the selected corridor. To be active, the system must be rearmed;
- Rearming: It is used to activate the system. It can be activated only by a push-button 9 in a shelf placed in the corridor which remains opened, for security reasons, to secure that no person or object is in said corridor. In the practice, it is advisable that the user keeps it activated when the activity is finished;
- Detection: The push-button 9 serves for an emergency stop, deactivating the system;
- Repositioning: It serves for, in the case of an emergency stop or any incident, such as e.g. an interruption in the security barrier, that stops the shelves 1, to reposition the shelves 1 in their suitable position to rearm the system. This repositioning permits to move to the right or to the left the shelves 1 up to their suitable position. The incorrect positioning state does not permit the rearming if previously they have not been previously repositioned correctly. For the movement to the left or to the right the same push-buttons 9 are used, that have changed the function mode to their new mode. Once repositioned, they return automatically to the normal mode.

On the other hand, the light indicator 10 of each shelf 1 indicates the state of the functions described as follows:
- Green: Corridor to the be opened;
- Yellow: Activated to be rearmed;
- Red: System stopped and deactivated;
- Intermittent red: Shelf incorrectly positioned.

The operation principle of the driving control and feeding system of the present invention is to permit the access to a corridor defined by two adjacent shelves 1 by a single manoeuvre pressing an opening push-button 9 corresponding to the shelf 1 of said corridor. To this end, all the existing shelves between the corridor to be opened and the corridor in use will be sequentially moved, with an interval from one to three seconds for each shelf 1, corresponding to a distance of about 20 cm.

The movement of each shelf 1 is: starting, with a progressive acceleration time to prevent abruptness, a constant moving time followed by a deceleration, and an approximation slow speed, until the stroke end detector 7 detects the arrival, sending a stop order, which is also done gently with deceleration.

To guarantee the security, the system of the present invention includes three security and protection devices, for the users and for the equipment itself, preventing overcharges in the case of incidents.

A first security device is a photoelectric barrier placed along the whole assembly of movable shelves or wardrobes, that deactivates the system when it is crossed by a person or object.

A second security device is a timer that counts the time from the activation of the motor 3, so that the movement time is always the same, if said time is exceeded in three seconds (adjustable) and no arrival signal has arrived, said movement is stopped.

Furthermore, as a third security device, the shelves 1 are provided with a consumption detector for the motor 3. When the strain of the motor exceeds a preset nominal value an over-consumption of current is generated, stopping the motor 3.

This stops are considered emergency stops.

Through the control means 2 it is possible to adjust the following parameters:
- Separation distance between the shelves 1;
- Security time at the end of the movement;
- Moving time according to the speed and distance to be moved, so that it can be adjusted from 6 seconds to 21 seconds;
- Maximum speed; and
- Minimum speed.

Even though reference is made to a specific embodiment of the invention, it is apparent for a person skilled in the art that the disclosed system is susceptible of numerous variations and modifications, and that all the details cited can be substituted by other technically equivalent ones, without departing from the scope of protection defined by the attached claims. All the parameters can be reprogrammed according to the specific application.

## Claims

1. Driving control and feeding system for movable shelves comprising a plurality of movable shelves (1) that can be moved along guides (8), each movable shelf (1) comprising one or more motors (3) for driving the movement of each shelf (1) and a driving electronic control and feeding box (2) to manage and feeding the motor (3), **characterised in that** each control and feeding box (2) comprises contact terminals (5) for recharging it, the terminals (5) of the control and feeding box (2) of one shelf (1) being in contact with the terminals (5) of the control and feeding box (2) of the adjacent shelf (1) only when the shelves (1) are substantially in contact to each other, in any of the two directions.

2. Driving control and feeding system according to claim 1, wherein said contact terminals (5) are telescopic terminals with a spring.

3. Driving control and feeding system according to claim 1, wherein the control and feeding box (2) of each movable shelf (1) is in wireless communication with the control and feeding box (2) of the other movable shelves (1).

4. Driving control and feeding system according to claim 3, wherein said wireless communication between the control and feeding boxes (4) of the movable shelves (1) is done by infrared beams and/or radiofrequency, both modulated by a digital serial code.

5. Driving control and feeding system according to claim 1, wherein each movable shelf (1) comprises a command panel (4) for driving the movement of the shelves (1), for rearming the system, for an emergency stop of the movement of the shelves (1) and for repositioning the shelves (1).

6. Driving control and feeding system according to claim 1, wherein each movable shelf (1) comprises a light indicator (10) with the following states: system ready, system activated for rearming, system stopped and deactivated, and shelf not correctly placed.

7. Driving control and feeding system according to claim 1, wherein each movable shelf (1) comprises a detector (7) that detects the stroke end of each shelf (1).

8. Driving control and feeding system according to claim 1, comprising a photoelectric security barrier to protect the access to an opened corridor between two shelves (1).
